# EUROPEAN PATENT APPLICATION

(11) **EP 2 418 731 A2**
(43) Date of publication of application: **15.02.2012**
(21) Application number: 11250423.8
(22) Date of filing: 04.04.2011
(51) Int. Cl.: H01Q 1/24, H01Q 1/40, B29C 45/14

(54) **Electronic device having transmission line pattern embedded in case and method for manufacturing the same**

(30) Priority: 13.08.2010 KR 20100078170
(71) Applicant: Samsung Electro-Mechanics Co., Ltd., Gyeonggi-do (KR)
(72) Inventor: Chang, Ki Won, Gyunggi-do (KR); Sung, Jae Suk, Gyunggi-do (KR); Lee, Dae Kyu, Gyunggi-do (KR); Park, Hyun Do, Gyunggi-do (KR); Han, Chang Mok, Gyunggi-do (KR); Mun, Hyun Sam, Gyunggi-do (KR); Lim, Dae Ki, Gyunggi-do (KR); Bae, Sang Woo, Gyunggi-do (KR); Jeon, Dae Seong, Gyunggi-do (KR); Hong, Ha Ryong, Gyunggi-do (KR)
(74) Representative: Powell, Timothy John

(57) **Abstract**

There are provided an electronic device having a transmission line pattern embedded in a case and a method for manufacturing the same. The electronic device includes a line pattern body embedded in a case and including a line pattern for electrically connecting components to each other, terminal portions respectively disposed at portions of the line pattern corresponding to terminals of the components to be electrically connected, and exposed from the bottom of the case, and connection members connecting the terminals of the components with the terminal portions.

## Description

### CROSS-REFERENCE TO RELATED APPLICATIONS

This application claims the priority of Korean Patent Application No. 10-2010-0078170 filed on August 13, 2010, in the Korean Intellectual Property Office, the disclosure of which is incorporated herein by reference.

### BACKGROUND OF THE INVENTION

### Field of the Invention

The present invention relates to an electronic device having a transmission line pattern embedded in a case thereof and a method for manufacturing the same.

### Description of the Related Art

With the rapid development of semiconductor integrated circuit technology and information technology, various portable electronic devices such as a portable multimedia player (PMP) , a personal digital assistant (PDA) , a smart phone, a laptop, and the like have become necessities of modern life.

Further, as portable electronic devices have come to be widely used, user requirements have been diversified, and as a result, portable electronic devices having multiple functions and which can be conveniently used have been continuously developed. For example, diversified functions such as digital broadcast transmitting and receiving (e.g., digital multimedia broadcasting (DMB)), navigation, Wibro, WIFI, Bluetooth, and the like have been incorporated into portable electronic devices.

In recent years, with the miniaturizing and thinning tendencies in the field of portable electronic devices, circuits having diversified functions need to be integrated into a limited internal space of portable electronic devices. In this case, in order to maximally utilize the internal space of portable electronic devices, spatially separated components, e.g., a printed circuit board (PCB), an antenna, an interface card, and the like are used.

However, in this case, a connection medium such as a flexible printed circuit board (FPCB) or a coaxial cable should be used in order to transfer a signal, such as a digital signal or a high-frequency signal transmitted through the antenna, between the PCBs, and a space for the connection media should be allocated within the inner part of the portable electronic device. Therefore, it is inefficient in terms of spatial utilization.

### SUMMARY OF THE INVENTION

An aspect of the present invention provides an electronic device that has a case embedded with a transmission line pattern for an electrical connection between spatially separated components so that an assembly process and an additional space for the electrical connection therebetween are not required, , and a method for manufacturing the same.

According to an aspect of the present invention, there is provided an electronic device including: a line pattern body embedded in a case and including a line pattern for electrically connecting components with each other; terminal portions respectively disposed at portions of the line pattern corresponding to terminals of the components to be electrically connected, and exposed from the bottom of the case; and connection members connecting the terminals of the components with the terminal portions.

The electronic device may further include a line pattern body frame to allow the line pattern body to be embedded in the case.

The electronic device may further include a case frame covering one surface of the line pattern body frame to allow the line pattern to be embedded between the case frame and the line pattern body frame.

The connection members may be elastically coupled to the respective terminal portions and the respective terminals of the components.

In this case, each of the connection members may be formed by a C-clip or a Pogo-pin.

Each of the connection members may have one end attached to a corresponding terminal of the terminals of the components and the other end elastically contacting a corresponding terminal portion of the terminal portions.

The line pattern body may be a flexible printed circuit board (FPCB).

The line pattern may be a strip line, a microstrip line, a coplanar waveguide (CPW), a coplanar waveguide with ground (CPW with GND) , a coplanar strip (CPS) , a slot line, or a parallel line.

The components electrically connected by the line pattern may include PCBs mounted with elements having predetermined functions, an antenna and an interface card, or an antenna and a PCB having a matching circuit.

Meanwhile, according to another aspect of the present invention, there is provided an electronic device having a transmission line pattern embedded in a case, the device including: a line pattern body embedded in a case and including a line pattern for transmitting signals; a radiator embedded in the case while being connected with one end of the line pattern and including an antenna pattern portion for transmitting and receiving signals; a terminal portion formed at the other end of the line pattern and exposed from the bottom of the case at a location corresponding to a terminal of a PCB transmitting and receiving signals to and from the radiator; and a connection member connecting the terminal portion and the terminal of the PCB to each other.

According to yet another aspect of the present invention, there is provided a method for manufacturing an electronic device having a transmission line pattern embedded in a case, the method including: manufacturing a line pattern for electrically connecting components to each other and a line pattern body having terminal portions at both ends of the line pattern; embedding the line pattern body in the case so as to allow the line pattern to be embedded in the case and the terminal portion to be exposed from the bottom of the case; and electrically connecting terminals of the components with the corresponding terminal portions of the line pattern by using connection members.

The embedding of the line pattern body in the case may be performed by insert-injection molding the line pattern body.

The embedding of the line pattern body in the case may include: manufacturing a line pattern body frame by insert-injection molding the line pattern body so as to allow the line pattern to be embedded therein and the terminal portion to be exposed; and manufacturing a case frame by insert-injection molding so as to allow the terminal portion of the line pattern body frame to cover an opposite surface to the exposed surface.

The manufacturing of the line pattern body frame may be performed by disposing the line pattern body to contact one inner surface of a manufacturing mold for the line pattern body frame and filling the manufacturing mold for the line pattern body frame with a resin material, and the manufacturing of the case frame may be performed by disposing the line pattern body frame to contact one inner surface of a manufacturing mold for the case frame and filling the manufacturing mold for the case frame with the resin material.

The electrically connecting the terminals with the terminal portions may include: attaching one end of each of the connection members to a corresponding terminal of the terminals of the components; and making the other end of each of the connection members electrically contact a corresponding terminal portion of the terminal portions.

The manufacturing of the line pattern body may be performed by screen-printing, sputtering, or plating a pattern corresponding to the line pattern on a flexible printed circuit board (FPCB) by using a conductive material.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a schematic exploded perspective view of a mobile communication terminal which is an electronic device according to an exemplary embodiment of the present invention;

FIG. 2 is a bottom view of a case of the mobile communication terminal which is the electronic device according to the exemplary embodiment of the present invention;

FIG. 3 is a schematic cross-sectional view of the mobile communication terminal which is the electronic device according to the exemplary embodiment of the present invention;

FIGS. 4A and 4B are plan views of line pattern bodies of the mobile communication terminal which is the electronic device according to the exemplary embodiment of the present invention;

FIGS. 5A to 5G are cross-sectional views illustrating diversified forms of a line pattern according to exemplary embodiments of the present invention;

FIGS. 6A and 6B are schematic cross-sectional views showing a state in which a resin material is filled in a line pattern body frame and a manufacturing mold thereof according to an exemplary embodiment of the present invention;

FIGS. 7A and 7B are schematic cross-sectional views showing a state in which a resin material is filled in a case frame having a line pattern embedded therein and a manufacturing mold thereof according to an exemplary embodiment of the present invention; and

FIG. 8 is a schematic exploded perspective view of a mobile communication terminal which is an electronic device according to another exemplary embodiment of the present invention.

### DETAILED DESCRIPTION OF THE PREFERRED EMBODIMENT

Hereinafter, exemplary embodiments of the present invention will be described with reference to the accompanying drawings. However, the spirit of the present invention is not limited to the exemplary embodiments and other exemplary embodiments included in other retrogressive inventions or that are within the spirit of the present invention could be easily proposed by those skilled in the art through adding, modifying, and deleting other components without departing from the same spirit. However, it will be included in the range of the spirit of the present invention.

Further, like or similar reference numerals refer to like elements having the same function within the same spirit shown in the drawings of the exemplary embodiments.

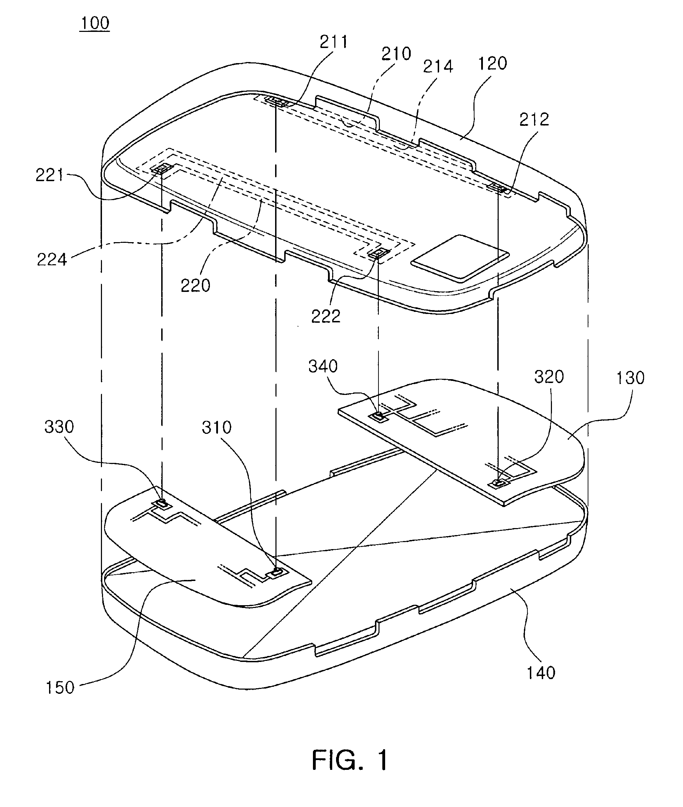

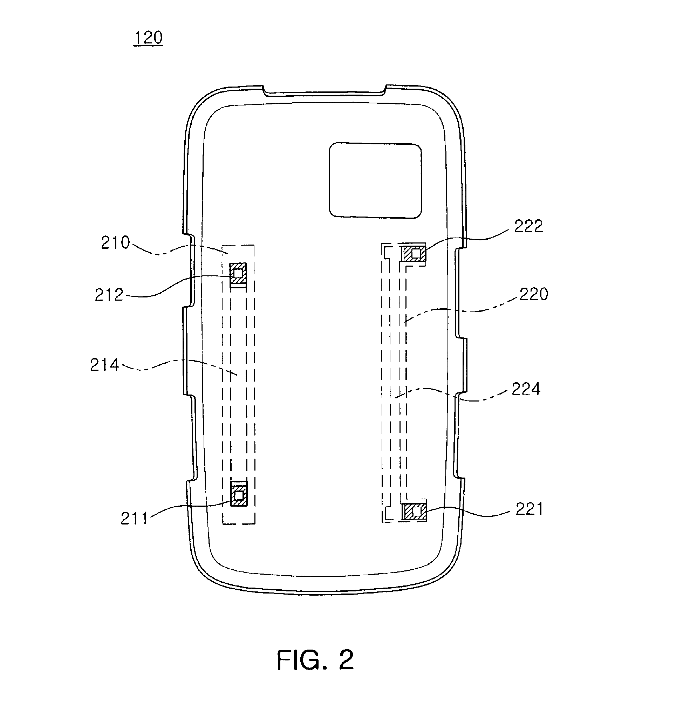

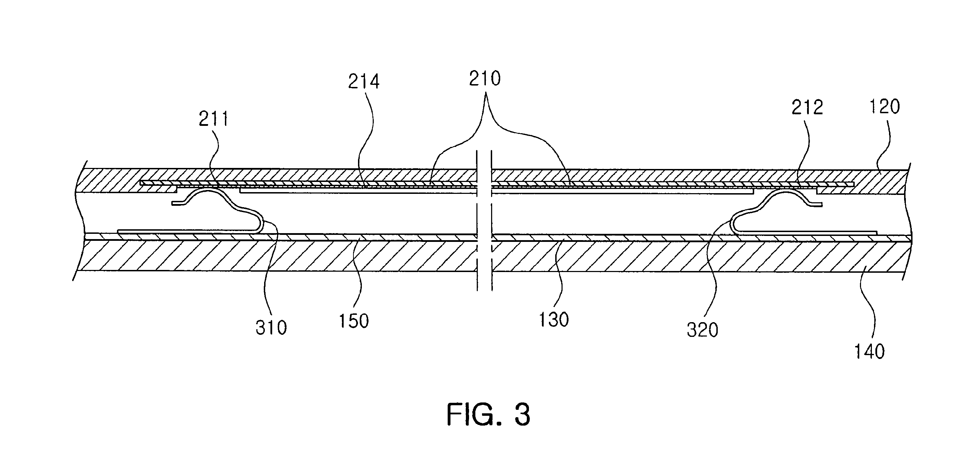

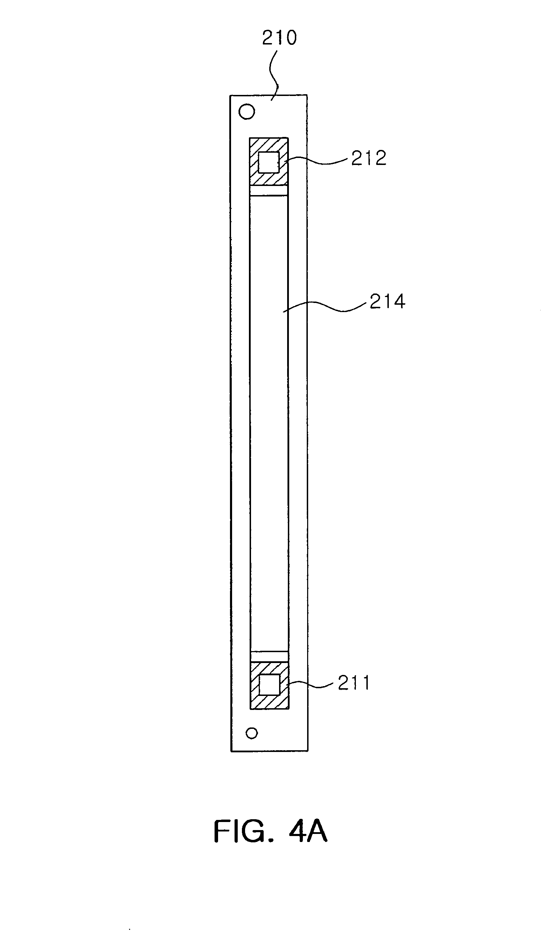

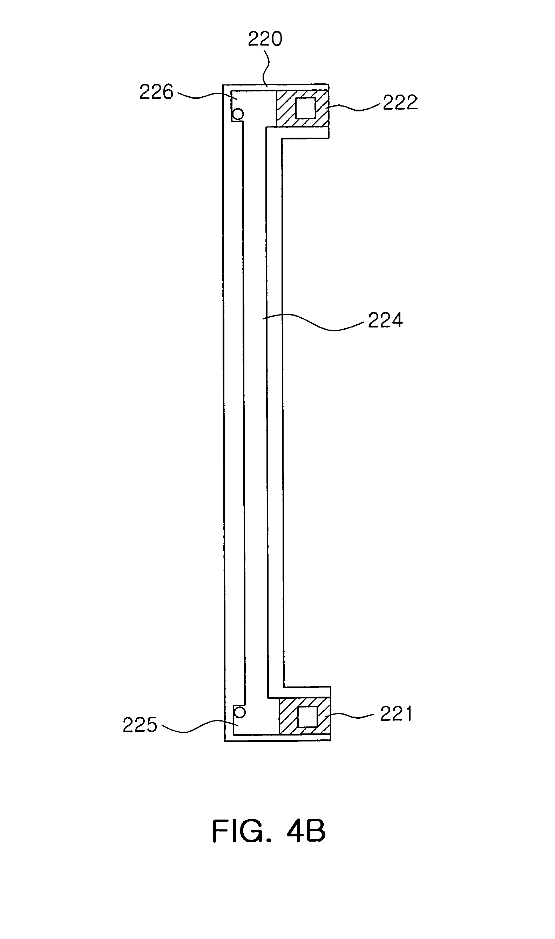

FIG. 1 is a schematic exploded perspective view of a mobile communication terminal which is an electronic device according to an exemplary embodiment of the present invention, FIG. 2 is a bottom view of a case of the mobile communication terminal, FIG. 3 is a schematic cross-sectional view of the mobile communication terminal, and FIGS. 4A and 4B are plan views of a line pattern body of the mobile communication terminal.

Referring to FIGS. 1 to 4B, the mobile communication terminal 100, which is the electronic device according to the exemplary embodiment of the present invention, may include a case 120 embedded with line pattern bodies 210 and 220 respectively having line patterns 214 and 224 for transmitting signals between spatially separated PCBs 130 and 150, and a main case 140 receiving the PCBs.

The line pattern bodies 210 and 220 may include a first line pattern body 210 having terminal portions formed on the same line as the line pattern thereof, and a second line pattern body 220 having terminal portions formed perpendicular to the line pattern thereof. Such formations of the terminal portions may be selected depending on the installation positions of components to be connected.

In detail, the first line pattern body 210 may include a first line pattern 214 for transmitting signals between predetermined circuits of a first PCB 130 and a second PCB 150, and first and second terminal portions 211 and 212 formed at both ends of the first circuit pattern 214 to provide electrical connections.

The first and second terminal portions 211 and 212 are exposed on the surface of the case 120, and the first line pattern 214 may be embedded in the case 120.

The second line pattern body 220 may include a second line pattern 224 for transmitting signals between predetermined circuits of the first PCB 130 and the second PCB 150, and third and fourth terminal portions 221 and 222 formed at both ends of the second circuit pattern 224 to provide electrical connections.

Similarly, the third and fourth terminal portions 221 and 222 are exposed on the surface of the case 120, and the second line pattern 224 may be embedded in the case 120.

Connection members for electrical connections with the terminal portions of the first line pattern 214 and the second line pattern 224 may be connected to terminals of predetermined circuits of the first PCB 130 and the second PCB 150.

In detail, the connection members may include a first connection member 310 connected with the first terminal portion 211 and a second connection member 320 connected with the second terminal portion 212 so as to transmit signals between the predetermined circuits of the first PCB 130 and the second PCB 150 through the first line pattern 214.

Further, the connection members may include a third connection member 330 connected with the third terminal portion 221 and a fourth connection member 340 connected with the fourth terminal portion 222 so as to transmit signals between the predetermined circuits of the first PCB 130 and the second PCB 150 through the second line pattern 224.

The first to fourth connection members 310 to 340 have ends connected to the corresponding terminals of the predetermined circuits of the first PCB 130 and or the second PCB 150 and other ends respectively connected to the first to fourth terminal portions 211, 212, 221, and 222.

In this case, the first to fourth connection members 310 to 340 are made of an elastic member to be elastically coupled to the corresponding terminals of the predetermined circuits of the first PCB 130 and the second PCB 150 or to the first to fourth terminal portions 211, 212, 221, and 222, respectively. For example, the first to fourth connection members 310 to 340 may be formed by a C-clip or a Pogo-pin.

The first to fourth connection members 310 to 340 may each be integrated with a corresponding one of the first PCB 130 and the second PCB 150 or formed as an additional member to be attached to a corresponding one of the terminals of the predetermined circuits of the first PCB 130 and the second PCB 150.

In FIG. 3, the first and second connection members 310 and 320 are formed as additional members and have ends respectively connected to the terminals of the predetermined circuits of the first PCB 130 and the second PCB 150 and other ends respectively, elastically connecting with the first and second terminal portions 211 and 212, but the present invention is not limited thereto. The ends of the first to fourth connection members 310 to 340 may be attached to the respective first to fourth terminal portions 211, 212, 221, and 222 and other ends thereof may elastically contact with the corresponding terminals of the predetermined circuits of the first PCB 130 and the second PCB 150. Further, the first to fourth connection members 310 to 340 may be appropriately integrated with the first line pattern 214 and the second line pattern 224 and may be modified in various forms according to required conditions design specifications.

As shown in FIG. 4A, the first line pattern body 210 may include the first line pattern 214 for transmitting signals and the first and second terminal portions 211 and 212 disposed at both ends of the first circuit pattern 214 and exposed on the bottom of the case 120. The first circuit pattern 214 and the first and second terminal portions 211 and 212 may be positioned on the same line.

In the first line pattern body 210, a conductor pattern having a shape corresponding to the first line pattern 214 may be formed by sputtering, printing, plating, stamping, drawing, or dispensing conductive materials on an FPCB.

As the FPCB, a low temperature co-fired ceramic (LTCC) or a high temperature co-fired ceramic (HTCC) may be used.

Signals such as a digital signal or a high-frequency signal transmitted through an antenna may be transmitted to the first line pattern 214.

As shown in FIG. 4B, the second line pattern body 220 may include the second line pattern 224 for transmitting signals and the third and fourth terminal portions 221 and 222 formed perpendicular to the second pattern 224. First and second connection portions 225 and 226 may extend from the third and fourth terminal portions 221 and 222, respectively. Here, the first connection portion 225 may be formed between one end of the second circuit pattern 224 and the third terminal portion 221, and the second connection portion 226 may be formed between the other end of the second circuit pattern 224 and the fourth terminal portion 222, so as to connect them to each other.

Although the circuit pattern bodies 210 and 220 transmit signals between circuits having predetermined functions of the first PCB 130 and the second PCB 150 in the exemplary embodiment, the present invention is not limited thereto and the line pattern bodies 210 and 220 may transmit high-frequency signals between a PCB having a matching circuit and an antenna and transmit signals between the antenna and an interface card.

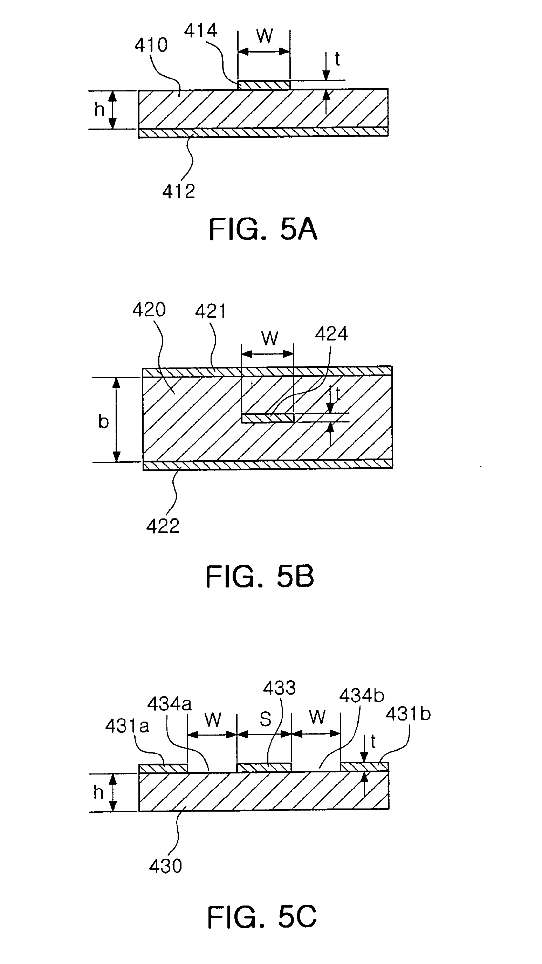

FIGS. 5A to 5G are cross-sectional views illustrating diversified forms of a line pattern according to exemplary embodiments of the present invention.

Referring to FIG. 5A, the line pattern according to an exemplary embodiment of the present invention may be a microstrip line. That is, a first conductor pattern 414 having a predetermined thickness t and width w is formed on one surface of an FPCB 410 having a predetermined thickness h and permittivity εᵣ and a second conductor pattern 412 having a width larger than the first conductor pattern 414 may be formed on an opposite surface to the one surface. Herein, the second conductor pattern 412 may be a ground metal plate.

As shown in FIG. 5B, the line pattern according to an exemplary embodiment of the present invention may a strip line. That is, a central conductor pattern 424 having a predetermined thickness t and width w is formed on one surface of an FPCB 420 having a predetermined thickness b and permittivity εᵣ, and a first surface conductor pattern 421 may be formed on one surface of the FPCB 420 and a second surface conductor pattern 422 may be formed on an opposite surface to the one surface of the FPCB 420.

As shown in FIG. 5C, the line pattern according to an exemplary embodiment of the present invention may a coplanar waveguide (CPW). That is, a central conductor pattern 433 having a predetermined thickness t and width s is formed on one surface of an FPCB 430 having a predetermined thickness h and permittivity εᵣ, and a first ground conductor 431a and a second a second ground conductor 431b between which the central conductor pattern 433 is interposed by a predetermined gap w from the central conductor pattern 433 may be formed on the same surface as a surface on which the central conductor pattern 433 is formed.

Herein, a first guiding slot 434a between the first ground conductor 431a and the central conductor pattern 433 and a second guiding slot 434b between the second ground pattern 431b and the central conductor pattern 433 may be formed with the same gap w. Further, the central conductor pattern 433, and the first ground conductor 431a and the second ground conductor 431b may be parallel to each other.

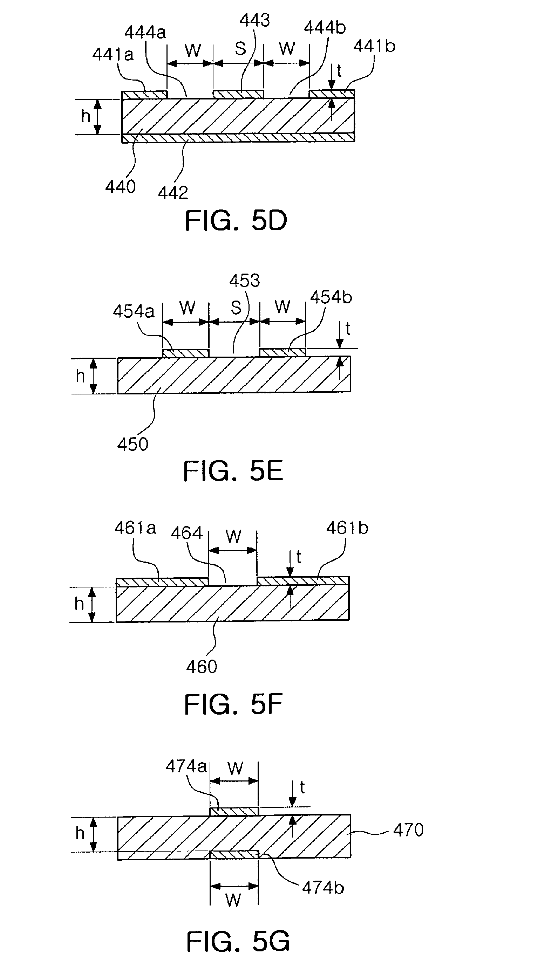

As shown in FIG. 5D, the line pattern according to an exemplary embodiment of the present invention may a coplanar waveguide with ground (CPWG). The CPWG further includes a ground metal plate on the bottom of the CPW shown in FIG. 5C. That is, a central conductor pattern 443 having a predetermined thickness t and width s is formed on one surface of an FPCB 440 having a predetermined thickness h and permittivity εᵣ, and a first ground conductor 441a and a second ground conductor 441b between which the central conductor pattern 443 is interposed by a predetermined gap w from the central conductor pattern 443 may be formed on the same surface as a surface on which the central conductor pattern 443 is formed, and a ground metal plate 442 may be formed on an opposite surface to the surface on which the central conductor pattern 443 of the FPCB 440 is formed.

As shown in FIG. 5E, the line pattern according to an exemplary embodiment of the present invention may a coplanar strip (CPS). The CPS is a line pattern having an opposite structure to the CPW. That is, a first conductor pattern 454a and a second conductor pattern 454b having a predetermined thickness t and width w may be formed on one surface of an FPCB 450 having a predetermined thickness h and permittivity εᵣ in parallel to each other by a predetermined gap s.

As shown in FIG. 5F, the line pattern according to an exemplary embodiment of the present invention may a slot line. The slot line has a pattern in which a signal is transmitted along a groove formed on a wide metal plate. That is, a conductive plate having a predetermined thickness t may be formed on one surface of an FPCB 460 having a predetermined thickness h and permittivity εᵣ, and the conductive plate has a groove 464 having a predetermined width w and may be divided into a first part 461a and a second part 461b by the groove 464.

As shown in FIG. 5G, the line pattern according to an exemplary embodiment of the present invention may be a parallel line. The parallel line is a balanced transmission line in which a signal line and a ground line have the same structure. That is, a first conductor pattern 474a having a predetermined thickness t and width w may be formed on one surface of an FPCB 470 having a predetermined thickness h and permittivity εᵣ and a second conductor pattern 474b having the same structure as the first conductor pattern 474a may be formed on an opposite surface to the one surface of the FPCB 470. Herein, the first conductor pattern 474a may be a signal line and the second conductor pattern 474b may be a ground line.

Hereinafter, a method for manufacturing a mobile communication terminal which is an electronic device according to an exemplary embodiment of the present invention will be described.

First, when a predetermined manufacturing method of the present invention is schematically described, a line pattern body having a line pattern and a terminal portion is manufactured, the line pattern body is insert-injection-molded such that the terminal portion is exposed while the line pattern is embedded in a case, and the terminal portion and parts of a main body are electrically connected with each other so as to complete the electronic device according to an exemplary embodiment the present invention.

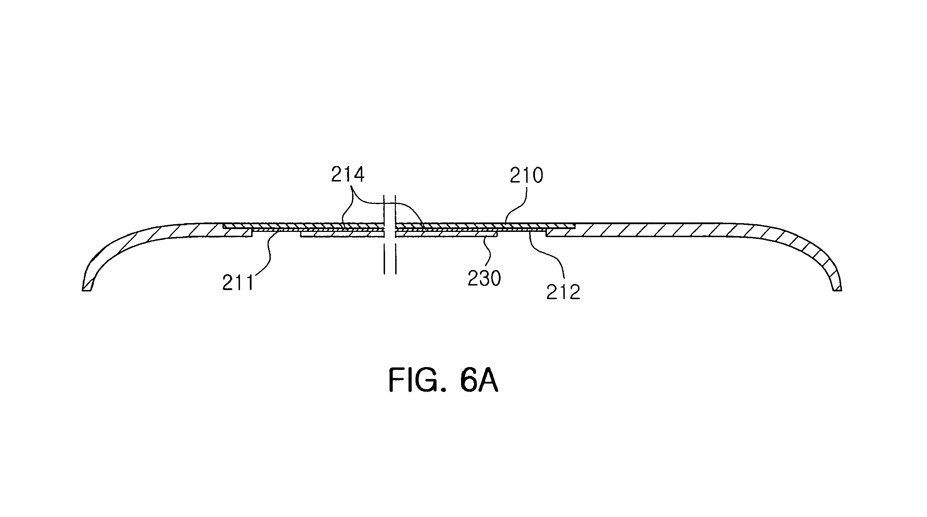

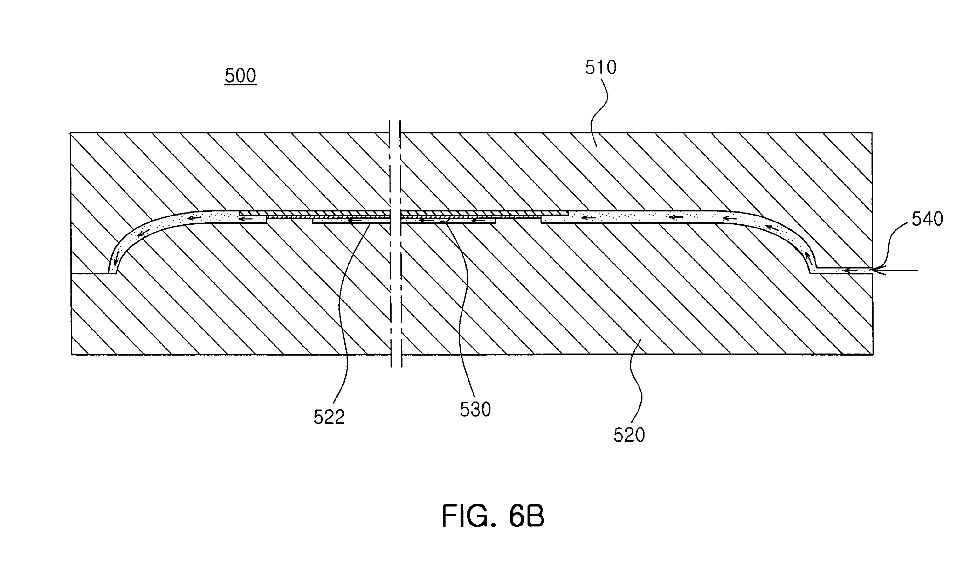

FIGS. 6A and 6B are schematic cross-sectional views showing a state in which a resin material is filled in a line pattern body frame and a manufacturing mold therefor according to an exemplary embodiment of the present invention.

Referring to FIGS. 6A and 6B, a line pattern 214 that transmits signals between components of a main body is formed by applying a conductive material to one surface of an FPCB, and first and second terminal portions 211 and 212 are formed at both ends of the line pattern 214 to thereby manufacture a line pattern body 210.

In this case, the application of the conductive material to one surface of a PCB may be performed by a method of sputtering, printing, plating, stamping, drawing, or dispensing a pattern corresponding to the line pattern 214.

Further, the first terminal portion 211 and the second terminal portion 212 may be formed in locations corresponding to terminals of components of the main body to be electrically connected to each other, e.g. , PCBs, a PCB and an antenna, and an antenna and an interface card.

The line pattern body 210 is disposed in a manufacturing mold 500 for a line pattern body frame, and a resin material may then be filled in an inner space 530 of the manufacturing mold 500 for the line pattern body frame.

The manufacturing mold 500 for the line pattern body frame includes an upper mold 510 contacting one surface of the FPCB of the line pattern body 210 opposing the other surface thereof on which the line pattern 214 is formed, and a lower mold 520 filled with the resin material.

When the line pattern body 210 is disposed in the upper mold 510 and the lower mold 520 which are combined with each other, the resin material is filled in the inner space 530 formed by the combination of the upper mold 510 and the lower mold 520 through an inlet 540.

In this case, portions of the bottom of the lower mold 520 corresponding to the first terminal portion 211 and the second terminal portion 212 are projected, and groove portions 522 filled with the resin material are formed in portions thereof other than the portions corresponding to the first terminal portion 211 and the second terminal portion 212.

Therefore, when the resin material is filled in the inner space 530, the resin material is filled in the part other than the portions where the first terminal portion 211 and the second terminal portion 212 are formed, such that when the line pattern body frame 230 is separated from the manufacturing mold 500 of the line pattern body 230, the first terminal portion 211 and the second terminal portion 212 may be exposed on the bottom of the line pattern body frame 230.

Herein, the line pattern body frame 230 may serve as a primary injection product for embedding the line pattern 214 in the case.

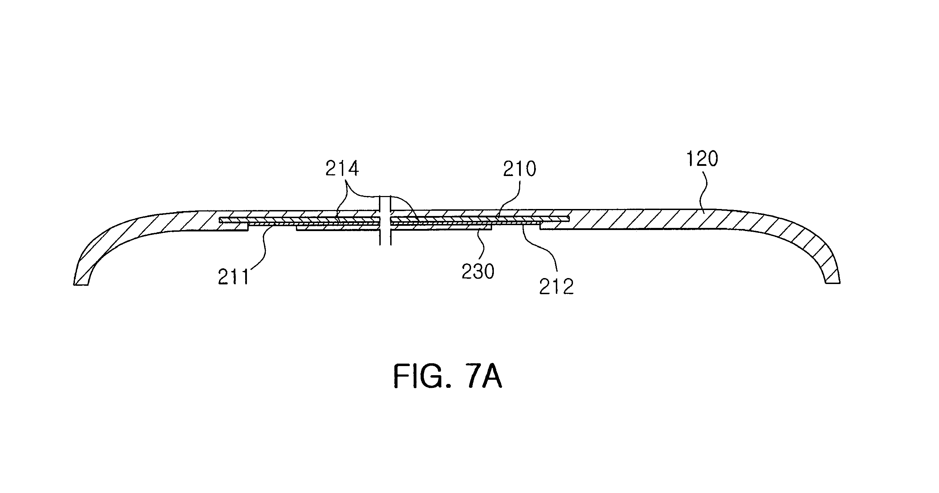

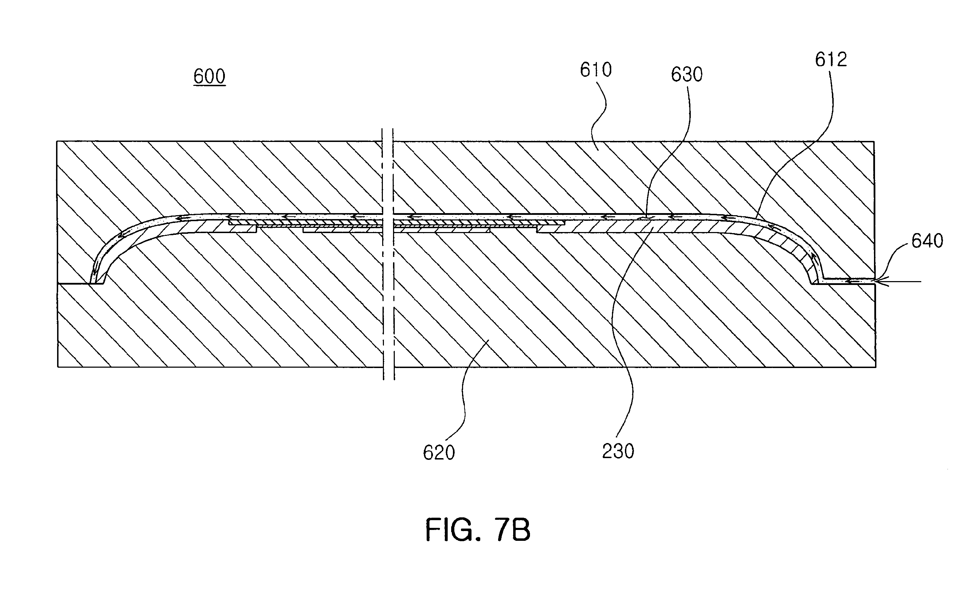

FIGS. 7A and 7B are schematic cross-sectional views showing a state in which a resin material is filled in a case frame having a line pattern embedded therein and a manufacturing mold therefor according to an exemplary embodiment of the present invention.

Referring to FIGS. 7A and 7B, a line pattern body frame 230 is disposed in a manufacturing mold 600 for a case frame, and a resin material is filled in the manufacturing mold 600 for the case frame to thereby manufacture a case frame (alternatively, a case 120) in which the line pattern 214 is embedded.

The manufacturing mold 600 for the case frame includes an upper mold 610 with an inner space 630 filled with the resin material and a lower mold 620 with an inner space where the line pattern body frame 230 is disposed to form the case frame 120.

The upper mold 610 has a groove 612 to form the inner space 630 between itself and one surface of the line pattern body frame 230 disposed therein. The bottom of the lower mold 620 may have the same shape as the surface on which the first terminal portion 211 and the second terminal portion 212 are formed.

As a result, the resin material is prevented from being applied to the surface of the line pattern body frame 230 on which the first terminal portion 211 and the second terminal portion 212 are formed. Therefore, the first terminal portion 211 and the second terminal portion 212 may be exposed on the bottom of the case frame 120.

The line pattern body frame 230 is disposed in the lower mold 620, and the lower mold 620 and the upper mold 610 are then combined together. Thereafter, the resin material is injected into the inner space 630, formed by the joined lower and upper molds 620 and 610, through the inlet 640, such that the resin material is filled to cover an opposite surface to the surface on which the terminal portions 211 and 212 of the line pattern body frame 230 are exposed. The part filled with the resin material constitutes the case frame 120.

Herein, the case frame 120 may serve as a secondary injection product for embedding the line pattern 214 in the case.

Although the line pattern body frame 230 and the case frame 120 are formed by insert-injection molding, it is merely exemplary and the present invention is not limited thereto. For example, the line pattern body frame 230 may be manufactured by attaching the line pattern body 210 to a frame having a predetermined shape, and the case frame 120 may be manufactured by attaching the manufactured line pattern body frame 230 to a frame having the shape of a previously manufactured case.

When the case 120 in which the line pattern 214 is embedded is completed, the circuits of the PCBs 130 and 150 of the main body are electrically connected with each other by using connection members 310 and 320.

This does not require an additional assembly process and may be made by assembling the case 120 to a main case 140 of the main body.

For example, as shown in FIG. 1, one end of the first connection member 310 is coupled to the terminal of the second PCB 150 and one end of the second connection member 320 is coupled to the terminal of the first PCB 130. Thereafter, when the case 120 is coupled with the main case 140, the other ends of the first and second connection members 310 and 320 elastically contact the first and second terminal portions 211 and 212 respectively, so as to electrically connect the circuit of the first PCB 130 and the circuit of the second PCB 150 to each other.

In this case, one end of the first connection member 310 and one end of the second connection member 320 may be coupled to the terminal of the second PCB 150 and the terminal of the first PCB 130, respectively by attachment using an adhesive agent.

This is the same even in electrical connections between the second line pattern 224, and the circuit of the first PCB 130 and the circuit of the second PCB 150.

In the exemplary embodiment, the first line pattern body 210 with the first line pattern 214 is manufactured, the first line pattern body frame 230 is formed by insert-injection molding the first line pattern body 210, and the case frame 120 is formed by insert-injection molding the first line pattern body pattern 230. However, the second line pattern body 220 with the second line pattern 224 may be manufactured and the second line pattern body 220 may be embedded in the case 120 through operations corresponding to the above operations.

As such, in the exemplary embodiment, since the circuit of the first PCB 130 and the circuit of the second PCB 150 are electrically connected with each other by combining the case 120 and the main case 140 with each other, an additional assembly process using a connection medium is not required. Since the line pattern is embedded in the case 120, an additional space for the connection medium is not required, allowing for the maximal utilization of the space therein.

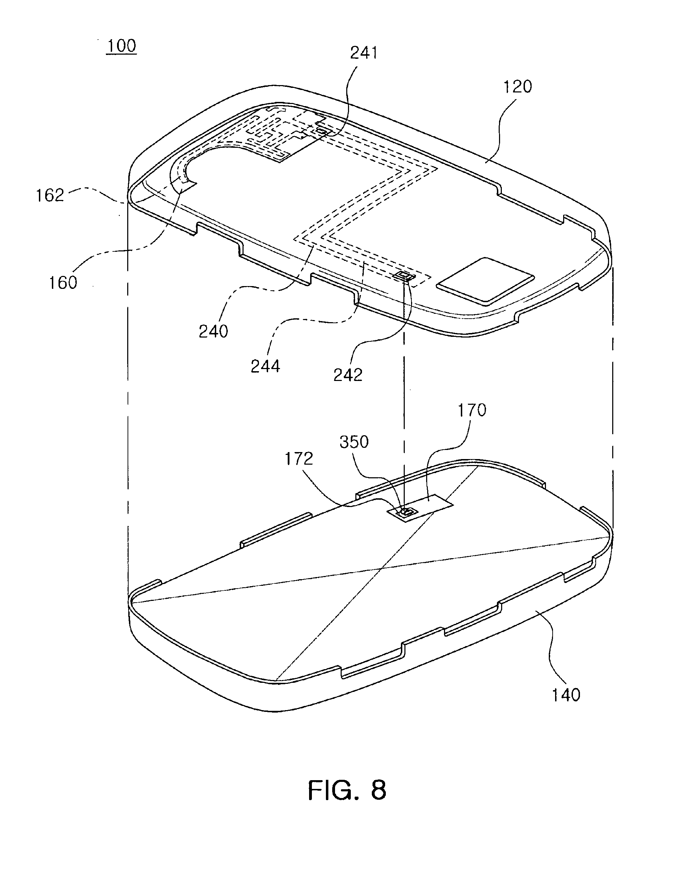

FIG. 8 is a schematic exploded perspective view of a mobile communication terminal which is an electronic device according to another exemplary embodiment of the present invention.

In the mobile communication terminal according to another exemplary embodiment of the present invention which is shown in FIG. 8, components connected by a transmission line pattern are an antenna embedded in a case and a PCB having a matching circuit. Since other components are substantially the same as those of the electronic device according to the previous exemplary embodiment of the present invention shown in FIG. 1, a detailed description of the components will be omitted and hereinafter, differences therebetween will be primarily described.

Referring to FIG. 8, the mobile communication terminal 100 according to another exemplary embodiment of the present invention may include a line pattern body 240 with a line pattern 244 for transmitting signals, a case 120 in which a radiator 160 with an antenna pattern portion 162 connected to the line pattern body 240 is embedded, and a main case 140 receiving a PCB 170.

The radiator 160 is connected to a first terminal portion 241 formed at one end of the line pattern 244 and is embedded in the case 120, and signals may be transmitted between the antenna pattern portion 162 of the radiator 160 and the PCB 170 through the line pattern 244.

The line pattern body 240 serves to support the line pattern 244 so as to embed the line pattern 244 in the case 120 and may have a shape corresponding to the shape of the line pattern 244.

In the exemplary embodiment, since a terminal of the antenna pattern portion 162 and a terminal of the PCB 170 are not positioned linearly, the line pattern 244 and the line pattern body 240 are curved. That is, the line pattern 244 and the line pattern body 240 may include a first extension portion extending parallel to a longitudinal direction of the case 120 on the first connection portion 241 connected with the terminal of the antenna pattern portion 162, a curved portion perpendicularly curved at the end of the first extension portion, and a second extension portion which is curved and extended parallel in the longitudinal direction of the case 120 at the end of the curved portion.

The PCB 170 includes a matching circuit for matching the signal transmitted from the antenna pattern 162 or to the antenna pattern portion 162, and an elastic connection member 350 may be disposed on the terminal 172.

One end of the connection member 350 may be coupled to the terminal 172 and the other end of the connection member 350 may elastically contact the second terminal portion 242 of the line pattern 244. The connection member 350 may be integrated with the PCB 170 or the line pattern body 240, and a free end of the connection member 350 may elastically contact the terminal of the PCB 170 or the second terminal portion 242 of the line pattern 244.

A first frame is formed by connecting the radiator 160 having the antenna pattern portion 162 with the line pattern body 240 having the line pattern 244 and insert-injection molding the connected components, and the first frame is also insert-injection molded to form a case frame, thereby manufacturing the case 120.

As described above, in the exemplary embodiment, when the antenna embedded in the case is manufactured, the line pattern can also be manufactured to be connected with the antenna. , Thus, an additional process of embedding the line pattern in the case is not required, thereby simplifying the process.

As set forth above, in an electronic device and a method for manufacturing the same according to exemplary embodiments of the present invention, , a space for connection media connecting spatially separated components or a process for assembling the connection media does not need to be allotted, the utilization efficiency of the internal space of the electronic device is improved.

While this invention has been described in connection with what are presently considered to be practical exemplary embodiments, it is to be understood that the invention is not limited to the disclosed embodiments, but, on the contrary, is intended to cover various modifications and equivalent arrangements included within the spirit and scope of the appended claims. For example, a configuration in which an additional connection member is attached to a terminal of a PCB is merely illustrative and may be integrated with the PCB, attached to a terminal portion of a line pattern, and integrated with the terminal portion of the line pattern. Accordingly, the scope of the present invention will be determined by the appended claims.

## Claims

1. An electronic device, comprising:
a line pattern body embedded in a case and including a line pattern for electrically connecting components to each other;
terminal portions respectively disposed at portions of the line pattern corresponding to terminals of the components to be electrically connected, and exposed from the bottom of the case; and
connection members connecting the terminals of the components with the terminal portions.

2. The electronic device of claim 1, further comprising a line pattern body frame to allow the line pattern body to be embedded in the case.

3. The electronic device of claim 2, further comprising a case frame covering one surface of the line pattern body frame to allow the line pattern to be embedded between the case frame and the line pattern body frame.

4. The electronic device of claim 1, wherein the connection members are elastically coupled to the respective terminal portions and the respective terminals of the components.

5. The electronic device of claim 4, wherein each of the connection members is formed by a C-clip or a Pogo-pin.

6. The electronic device of claim 1, wherein each of the connection members has one end attached to a corresponding terminal of the terminals of the components and the other end elastically contacting a corresponding terminal portion of the terminal portions.

7. The electronic device of claim 1, wherein the line pattern body is a flexible printed circuit board (FPCB).

8. The electronic device of claim 1, wherein the line pattern is a strip line, a microstrip line, a coplanar waveguide (CPW) , a coplanar waveguide with ground (CPWG) , a coplanar strip (CPS), a slot line, or a parallel line.

9. The electronic device of claim 1, wherein the components electrically connected by the line pattern include PCBs mounted with elements having predetermined functions, an antenna and an interface card, or a an antenna and a PCB having a matching circuit.

10. An electronic device, comprising;
a line pattern body embedded in a case and including a line pattern for transmitting signals;
a radiator embedded in the case while being connected with one end of the line pattern and including an antenna pattern portion for transmitting and receiving signals;
a terminal portion formed at the other end of the line pattern and exposed from the bottom of the case at a location corresponding to a terminal of a PCB transmitting and receiving signals to and from the radiator; and
a connection member connecting the terminal portion and the terminal of the PCB to each other.

11. A method for manufacturing an electronic device, the method comprising;
manufacturing a line pattern for electrically connecting components to each other and a line pattern body having terminal portions at both ends of the line pattern;
embedding the line pattern body in the case so as to allow the line pattern to be embedded in the case and the terminal portion to be exposed from the bottom of the case; and
electrically connecting terminals of the components with the corresponding terminal portions of the line pattern by using connection members.

12. The method of claim 11, wherein the embedding of the line pattern body in the case is performed by insert-injection molding the line pattern body.

13. The method of claim 12, wherein the embedding of the line pattern body in the case includes:
manufacturing a line pattern body frame by insert-injection molding the line pattern body so as to allow the line pattern to be embedded therein and the terminal portion to be exposed; and
manufacturing a case frame by insert-injection molding so as to allow the terminal portion of the line pattern body frame to cover an opposite surface to the exposed surface.

14. The method of claim 13, wherein the manufacturing of the line pattern body frame is performed by disposing the line pattern body to contact one inner surface of a manufacturing mold for the line pattern body frame and filling the manufacturing mold for the line pattern body frame with a resin material, and
the manufacturing of the case frame is performed by disposing the line pattern body frame to contact one inner surface of a manufacturing mold for the case frame and filling the manufacturing mold for the case frame with a resin material.

15. The method of claim 11, wherein the electrically connecting of the terminals to the terminal portions includes:
attaching one end of each of the connection members to a corresponding terminal of the terminals of the components; and
making the other end of each of the connection members electrically contact a corresponding terminal portion of the terminal portions.

16. The method of claim 11, wherein the manufacturing of the line pattern body is performed by sputtering, printing, plating, stamping, drawing, or dispensing a pattern corresponding to the line pattern on a flexible printed circuit board (FPCB) by using a conductive material.
